# EUROPÄISCHE PATENTANMELDUNG

(11) **EP 2 180 566 A2**
(43) Veröffentlichungstag der Anmeldung: **28.04.2010**
(21) Anmeldenummer: 09013009.7
(22) Anmeldetag: 15.10.2009
(51) Int. Cl.: H02G 3/14, H02G 3/12

(54) **Abdeckvorrichtung**

(30) Priorität: 27.10.2008 DE 202008014279 U
(71) Anmelder: Streibel, Helmut, 94034 Passau (DE)
(72) Erfinder: Streibel, Helmut, 94034 Passau (DE)

(57) **Zusammenfassung**

**2. Kurzfassung**

**2.1 Technisches Problem der Erfindung**

Technische Aufgabe und Zielsetzung der Erfindung ist, zeit- und kostenintensive Abklebearbeiten an elektrischen Einrichtungen, die auf einer Trägerwand montiert sind (Unterputzdosen in Verbindung mit elektrischem Einsatz, Zentralscheibe, Rahmen, Haltespange, etc.) zu vermeiden, damit ein Farbaufstrich durchgeführt werden kann, ohne dass der Doseneinsatz oder der Tragring durch den Farbauftrag beschmutzt oder beschädigt wird.

Bei Steckdoseneinsätzen kann zusätzlich der Farbauftrag die Schutzkontakte überdecken und damit die Funktion beinträchtigen.

Auch muss, wenn eine Steckdosen noch unter einer elektrischen Spannung steht und trotzdem der Rahmen und die Zentralscheibe demontiert wurden, der Abklebevorgang in unmittelbare Nähe von spannungsführenden Teilen durchgeführt werden, was zu einer Lebensgefahr für Lebewesen führt.

Die Doseneinsatzabdeckung ist wiederverwendbar und leicht zu reinigen.

**2.2 Lösung des technischen Problems**

Wesentliches Merkmal der Erfindung ist eine Abdeckfläche, die einem ebenen

Prisma mit ebenen Quadrat entspricht, wobei dieses zur elektrischen Einrichtung hin offen ist und den Tragring nebst Doseneinsatz abdeckt.

Gehalten wird die Erfindung durch mindestens einem Haltestift, der in die elektrische Einrichtung einschiebbar ist und durch den Einschub gehalten wird.

Die Erfindung ist aus Kunststoff und kann beliebig oft neben- und/oder übereinander angeordnet werden.

**2.3 Anwendungsgebiet**

Anwendungsgebiet ist die Elektroinstallationstechnik.

## Beschreibung

Die Erfindung betrifft eine Abdeckvorrichtung für ein in einer Wand oder Decke oder Boden installierbares elektrisches Installationsgerät, insbesondere Unterputzgerät, wie z.B. Steckdoseneinsatz oder Schalterdoseneinsatz.

Derartige Abdeckvorrichtungen sind aus dem Stand der Technik bekannt. So beschreibt DE 295 14 138 U1 eine Abdeckung für elektrische Installationsgeräte, welche dadurch gekennzeichnet ist, dass es auf seiner Vorderseite mindestens einen von der Oberfläche vorstehenden Findungsansatz und auf seiner Rückseite mindestens ein Befestigungsmittel zur kraft- und/oder formschlüssigen Verbindung mit dem Installationsgerät aufweist.

Diese Abdeckung aus dem Stand der Technik birgt jedoch einige Nachteile. So ist seine Herstellung durch das fest integrierte Befestigungsmittel auf der Rückseite relativ aufwändig. Ferner muss bei der Herstellung dieser Abdeckung eingeplant werden, dass es eine Vielzahl unterschiedlich ausgebildeter Installationsgeräte gibt, wobei es schwierig ist, ein fest integriertes Befestigungsmittel zu finden, welches auch mit sämtlichen Installationsgeräten zusammenwirken kann.

Ein weiterer großer Nachteil der Abdeckungen aus dem Stand der Technik besteht darin, dass diese in einfacher Art und Weise von Laien oder Unbefugten vom elektrischen Installationsgerät abgenommen werden können. Dadurch werden die elektrischen Leitungen im Inneren des Installationsgerätes freigelegt, was zu lebensgefährlichen Situationen durch Stromschlag führen kann.

Der vorliegenden Erfindung liegt die Aufgabe zugrunde, eine einfache und kostengünstige Abdeckvorrichtung zur Verfügung zu stellen, die verschiedenartige elektrische Installationsgeräte, insbesondere bei Renovierungsarbeiten oder dergleichen gegen das Eindringen von Fremdsubstanzen schützt und zugleich nicht ohne weiteres von unbefugten Personen abmontiert werden kann.

Diese Aufgabe wird erfindungsgemäß durch eine Abdeckvorrichtung für ein in einer Wand oder Decke oder Boden installierbares elektrisches Installationsgerät, insbesondere Unterputzgerät, wie z.B. Steckdoseneinsatz oder Schalterdoseneinsatz, mit einer Abdeckplatte zur Abdeckung des elektrischen Installationsgerätes, und mindestens einem Befestigungsmittel zur sicheren Befestigung der Abdeckplatte am Tragring des elektrischen Installationsgerätes gelöst. Durch die Tatsache, dass das Befestigungsmittel der erfindungsgemäßen Abdeckplatte mit dem Tragring des elektrischen Installationsgerätes bei der Befestigung der Abdeckplatte zusammenwirkt, wird sichergestellt, dass die erfindungsgemäße Abdeckvorrichtung an die meisten elektrischen Installationsgeräte in einfacher Art und Weise angebracht werden kann, da nahezu alle elektrischen Installationsgeräte einen derartigen Tragring aufweisen.

Bei einer bevorzugten Ausführungsform der erfindungsgemäßen Abdeckvorrichtung ist das mindestens eine Befestigungsmittel eine Spezialschraube, die sich durch eine Öffnung in der Abdeckplatte erstreckt und mit dem Tragring des elektrischen Installationsgerätes kraft- und/oder formschlüssig zusammenwirkt. Als Schraube ist hier auch ein spezieller Stift mit Kopf zu verstehen, dessen Schaft auch ohne Schraubengewinde ausgebildet sein kann. Durch die Wahl einer derartigen Spezialschraube als Befestigungsmittel wird eine einfache und sichere Befestigung der Abdeckplatte am Tragring des elektrischen Installationsgerätes möglich. Mit Vorteil ist diese Spezialschraube nur durch ein Spezialwerkzeug (z.B. Spezialschraubenzieher) zu lösen. Dadurch wird es fast unmöglich, dass Unbefugte die Abdeckvorrichtung vom elektrischen Installationsgerät lösen können.

Vorzugsweise weist die mindestens eine Spezialschraube an ihrem, dem Schraubenkopf entgegengesetzten Schaftende mindestens einen Haken zum Einhaken am Tragring auf, wobei zwischen der Abdeckplatte und dem Schraubenkopf der Spezialschraube eine Feder angeordnet ist, sodass der Haken der Spezialschraube im eingehakten (befestigten) Zustand durch die Federkraft an die Unterseite des Tragringes gezogen wird. Die Feder wirkt also zum einen als Gegenlager. Zum anderen wirkt die Feder jedoch auch als Anzeiger, ob die Schraube angezogen oder gelöst ist.

Bei einer weiteren Ausführungsform der erfindungsgemäßen Abdeckvorrichtung weist der Schraubenschaft der Spezialschraube eine im Wesentlichen ovale Form auf, wobei der Schraubenschaft durch Drehen an den Tragring zur Erzeugung eines Kraftschlusses anpressbar ist.

Die oben genannte Spezialschraube kann auch zwei übereinander bzw. leicht versetzt angeordnete Haken aufweisen. Dadurch ist es möglich, dass beim Einhaken der Spezialschraube am Tragring des elektrischen Installationsgerätes beide Haken den Tragring umschließen, was eine besonders hohe Stabilität der Verbindung zwischen der Abdeckplatte und dem Tragring gewährleistet.

Mit Vorteil weist die Abdeckplatte im Bereich der Öffnung für die Spezialschraube eine Vertiefung zur Versenkung der Spezialschraube im befestigten Zustand auf. Dadurch wird erreicht, dass die Oberseite des Schraubenkopfes mit der Oberseite der Abdeckplatte eine ebene Fläche bildet. Zudem wird einem Benutzer besonders deutlich angezeigt, ob die Spezialschrauben in einem angezogenen oder gelösten Zustand vorliegen.

Mit Vorteil sind mindestens zwei, vorzugsweise diagonal an der Tragplatte angeordnete Spezialschrauben vorgesehen. Dadurch wird eine besonders stabile Befestigung der Abdeckplatte am elektrischen Installationsgerät erreicht.

Vorzugsweise ist der mindestens einen Spezialschraube eine Schutzkappe, die auf den Schraubenkopf aufsteckbar ist, zugeordnet. Die Schutzkappe wird insbesondere nach dem Anziehen (Einhaken) der Schraube auf den Schraubenkopf aufgesteckt. Durch die Schutzkappe wird die Schraube beispielsweise vor Farbe geschützt, wenn Malerarbeiten im Bereich des elektrischen Installationsgerätes durchgeführt werden. Auch dient die Schutzkappe als zusätzlicher Schutz vor einer unbefugten Demontage der Spezialschraube.

Das Befestigungsmittel kann auch ein Magnet sein. Durch diesen Magneten wird vorzugsweise eine besonders starke magnetische Befestigung erreicht, die es unmöglich macht, die Abdeckvorrichtung vom elektrischen Installationsgerät zu entfernen.

Mit Vorteil weist die Abdeckvorrichtung einen, vorzugsweise zwei, von der Abdeckplatte abstehenden Stift auf, der mit einer Öffnung des elektrischen Installationsgerätes kraft- und/oder formschlüssig zusammenwirkt. Durch diesen Stift wird eine weitere Stabilisierung der Verbindung zwischen der erfindungsgemäßen Abdeckvorrichtung und dem elektrischen Installationsgerät erreicht.

Mit Vorteil ist an der Abdeckplatte ein Griff angeordnet. Durch diesen Griff kann die Abdeckvorrichtung in einfacher Art und Weise nach der Demontage vom elektrischen Installationsgerät abgenommen werden. Der Griff kann in verschiedensten Formen ausgebildet sein. So kann der Griff kugelkopfförmig, als Haltebügel, als Vertiefung mit Griffmulde oder als einfache Platte ausgebildet sein. Auch kann Werbung auf der Abdeckplatte angebracht sein.

Die Abdeckvorrichtung ist vorzugsweise aus einem elektrisch nicht leitenden Material, vorzugsweise aus Kunststoff.

Weitere Merkmale der Erfindung ergeben sich aus der nachfolgenden Beschreibung von bevorzugten Ausführungsformen der Erfindung in Verbindung mit den Zeichnungen und den Unteransprüchen. Hierbei können die einzelnen Merkmale jeweils für sich allein oder in Kombination miteinander verwirklicht sein.

In den Zeichnungen zeigen:
- Fig. 1:: Eine Seitenansicht einer erfindungsgemäßen Abdeckvorrich- tung im befestigten Zustand;
- Fig. 2:: eine Draufsicht auf die Abdeckvorrichtung von Fig. 1;
- Fig. 3:: einen vergrößerten Ausschnitt aus einer weiteren Ausfüh- rungsform der erfindungsgemäßen Abdeckvorrichtung im Bereich einer Spezialschraube;
- Fig. 4:: einen vergrößerten Ausschnitt aus einer weiteren Ausfüh- rungsform der erfindungsgemäßen Abdeckvorrichtung im Bereich einer Spezialschraube;
- Fig. 5:: eine Draufsicht auf eine weitere Ausführungsform der erfindungsgemäßen Abdeckvorrichtung.

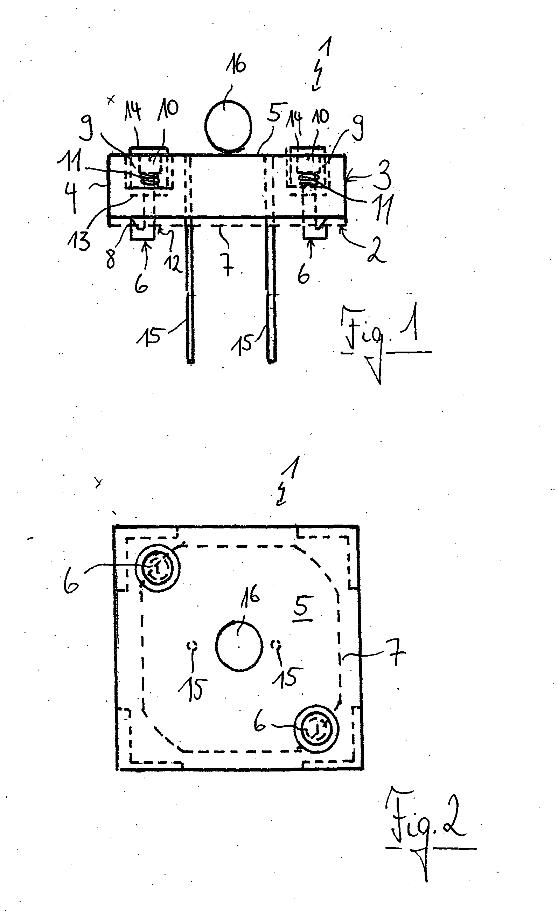

Fig. 1 zeigt eine Seitenansicht einer erfindungsgemäßen Abdeckvorrichtung 1 im an einem Steckdoseneinsatz 2 befestigten Zustand. Die Abdeckvorrichtung 1 deckt den Steckdoseneinsatz 2 durch das nach unten hin offene Gehäuse 3 komplett ab. Das Gehäuse 3 weist eine quaderförmige Form auf. Das Gehäuse 3 weist Seitenwände 4 sowie eine Abdeckplatte 5 auf. Die Abdeckvorrichtung 1 ist mittels Spezialschrauben 6 am Tragring 7 des Steckdoseneinsatzes 2 befestigt. Zur Befestigung am Tragring 7 weisen die Spezialschrauben 6 Haken 8 zum Einhaken am Tragring auf. Die Spezialschrauben 6 sind im eingehakten (befestigten) Zustand in einer Vertiefung 9 in der Abdeckplatte 5 versenkt, so dass die Oberseiten der Köpfe 10 der Spezialschrauben 6 mit der Abdeckplatte 5 eine ebene Fläche bilden. Zwischen den Schraubenköpfen 10 der Spezialschrauben 6 und der Abdeckplatte 5 ist eine Feder 11 angeordnet. Die Feder 11 bewirkt, dass die Spezialschrauben 6 im eingehakten Zustand an die Unterseite 12 des Tragringes 7 gezogen werden. Werden die Spezialschrauben 6 gelöst, das heißt, vom Tragring ausgehakt, so heben die Federn 11 die Schrauben 6 an, so dass sie aus der Abdeckplatte 5 herausragen und einem Benutzer anzeigen, dass die Spezialschrauben 6 gelöst sind. Im Inneren des Gehäuses 3 ist jeder Spezialschraube 6 ein Ring, insbesondere eine Zahnscheibe 13 zugeordnet, um auch an der Unterseite der Abdeckplatte 5 ein Gegenlager für die Schrauben 6 zu haben.

Die Schraubenköpfe 10 sind durch Schutzkappen 14, die auf die Köpfe 10 der Spezialschrauben 6 gesteckt sind, geschützt. Dadurch wird beispielsweise verhindert, dass Farbe bei Malerarbeiten auf die Spezialschraubenköpfe gelangt. Auch wird ein Schutz vor unbefugtem Betätigen der Schrauben gewährleistet.

Die Abdeckvorrichtung 1 weist ferner zwei Stifte 15 auf, die von der Unterseite der Abdeckplatte 5 abstehen und weit aus dem Gehäuse 3 herausragen. Die Stifte 15 dienen zum Einstecken in die Öffnungen des Steckdoseneinsatzes 2. Dies gewährleistet einen noch stabileren Halt der Abdeckvorrichtung 1 im Steckdoseneinsatz 2.

Auf der Oberseite der Abdeckplatte ist ein kugelförmiger Haltegriff 16 angeordnet.
Fig. 2 zeigt die erfindungsgemäße Abdeckvorrichtung 1 von Fig. 1. Die Spezialschrauben 6 sind diagonal an der quadratischen Abdeckplatte 5 angeordnet.

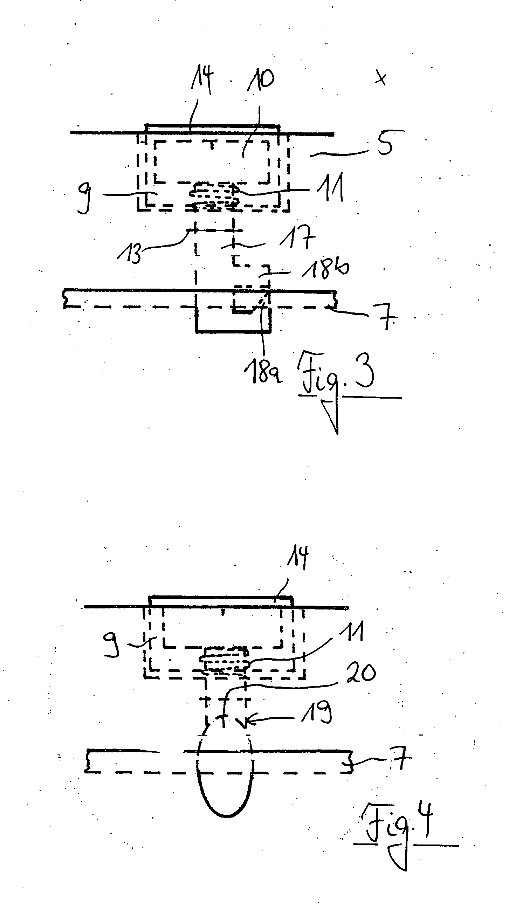

Fig. 3 zeigt eine weitere Ausführungsform einer Spezialschraube 17 einer weiteren Ausführungsform einer erfindungsgemäßen Abdeckvorrichtung. Bis auf die Ausbildung der Spezialschrauben sind die Abdeckvorrichtungen aus Fig. 1 und Fig. 3 identisch, so dass hier identische Bezugszeichen für identische Elemente verwendet wurden. Die Spezialschraube 17 weist 2 übereinander, um 0 bis 120 Grad (hier ca. 30 Grad) versetzt angeordnete Haken 18a, 18b auf. Durch diese Anordnung wird der Tragring 7 beim Befestigen der Abdeckvorrichtung zwischen die beiden Haken 18a, 18b eingeklemmt, was einen besonders stabilen Halt gewährleistet.
Fig. 4 zeigte eine weitere Ausführungsform einer erfindungsgemäßen Spezialschraube 19 einer weiteren Ausführungsform einer erfindungsgemäßen Abdeckvorrichtung. Auch diese Ausführungsform unterscheidet sich von der Abdeckvorrichtung von Fig. 1 lediglich durch die unterschiedlich ausgebildeten Spezialschrauben. Diese Spezialschrauben 19 weisen einen oval geformten Schaft 20 auf, der sich beim Drehen der Spezialschrauben an den Tragring 7 anschmiegt und so einen Halt der Schrauben am Tragring gewährleisten.

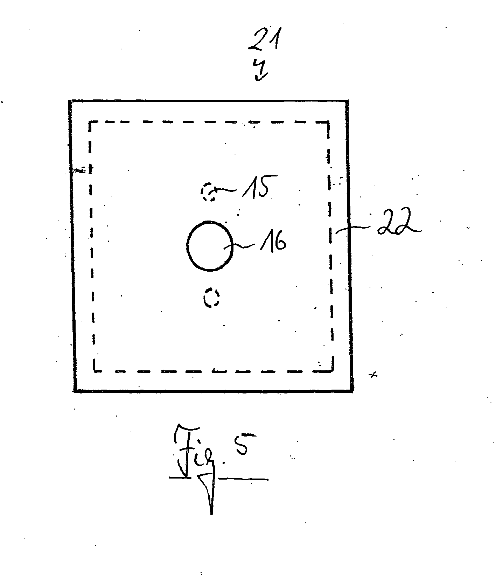

Fig. 5 zeigt eine weitere Ausführungsform einer erfindungsgemäßen Abdeckvorrichtung 21, bei der das Befestigungsmittel ein Magnet ist, der sich um die gesamte Peripherie der Abdeckplatte 22 erstreckt.

## Patentansprüche

1. Abdeckvorrichtung für ein in einer Wand oder Decke oder Boden installierbares elektrisches Installationsgerät (2), insbesondere Unterputzgerät, wie z.B. Steckdoseneinsatz oder Schalterdoseneinsatz, mit einer Abdeckplatte (5) zur Abdeckung des elektrischen Installationsgerätes, und mindestens einem Befestigungsmittel (6, 17, 19, 22) zur sicheren Befestigung der Abdeckplatte am elektrischen Installationsgerät, insbesondere am Tragring (7) des elektrischen Installationsgerätes.

2. Abdeckvorrichtung nach Anspruch 1, **dadurch gekennzeichnet, dass** das mindestens eine Befestigungsmittel eine Spezialschraube (6, 17,19) (oder ein Spezialstift) ist, die sich durch eine Öffnung in der Abdeckplatte (5) erstreckt und mit dem Tragring (7) des elektrischen Installationsgerätes (2) kraft- und/oder formschlüssig zusammenwirkt.

3. Abdeckvorrichtung nach Anspruch 2, **dadurch gekennzeichnet, dass** die Spezialschraube (6, 17) an Ihrem dem Schraubenkopf (10) entgegengesetzten Schaftende mindestens einen Haken (8, 18a, 18b) zum Einhaken am Tragring (7) aufweist, wobei zwischen der Abdeckplatte (5) und dem Schraubenkopf der Spezialschraube vorzugsweise eine Feder (11) angeordnet ist, sodass der Haken der Spezialschraube im eingehakten (befestigten) Zustand durch die Federkraft an die Unterseite (12) des Tragrings gezogen wird.

4. Abdeckvorrichtung nach einem der Ansprüche 2 oder 3, **dadurch gekennzeichnet, dass** der Schraubenschaft (20) eine im Wesentlichen ovale Form aufweist und durch Drehen an den Tragring (7) anpressbar ist zur Erzeugung eines Kraftschlusses.

5. Abdeckvorrichtung nach einem der Ansprüche 2 bis 4, **dadurch gekennzeichnet, dass** die Spezialschraube (17) zwei übereinander und vorzugsweise zueinander versetzt angeordnete Haken (18a, 18b) aufweist.

6. Abdeckvorrichtung nach einem der Ansprüche 2 bis 5, **dadurch gekennzeichnet, dass** die Abdeckplatte (5) im Bereich der Öffnung für die Spezialschraube (6, 17, 19) eine Vertiefung (9) zur Versenkung der Spezialschraube im befestigten Zustand aufweist.

7. Abdeckvorrichtung nach einem der Ansprüche 1 bis 6, **dadurch gekennzeichnet, dass** mindestens zwei, vorzugsweise diagonal an der Abdeckplatte (5) angeordnete Spezialschrauben (6, 17, 19) vorgesehen sind.

8. Abdeckvorrichtung nach einem der Ansprüche 2 bis 7, **dadurch gekennzeichnet, dass** der mindestens einen Spezialschraube (6, 17, 19) eine Schutzkappe (14), die auf den Schraubenkopf aufsteckbar ist, zugeordnet ist.

9. Abdeckvorrichtung nach einem der vorhergehenden Ansprüche, **dadurch gekennzeichnet, dass** das mindestens eine Befestigungsmittel ein Magnet (22) ist.

10. Abdeckvorrichtung nach einem der vorhergehenden Ansprüche, **gekennzeichnet durch** mindestens einen, vorzugsweise zwei, von der Abdeckplatte abstehenden Stift (15), der mit einer Öffnung des elektrischen Installationsgerätes kraft- und/oder formschlüssig zusammenwirkt.

11. Abdeckvorrichtung nach einem der vorhergehenden Ansprüche, **dadurch gekennzeichnet, dass** an der Abdeckplatte ein Griff (16) angeordnet ist.

12. Abdeckvorrichtung nach einem der vorhergehenden Ansprüche, **dadurch gekennzeichnet, dass** sie aus Kunststoff gefertigt ist.
